# EUROPEAN PATENT APPLICATION

(11) **EP 1 045 604 A2**
(43) Date of publication of application: **18.10.2000**
(21) Application number: 00302833.9
(22) Date of filing: 04.04.2000
(51) Int. Cl.: H04Q 7/38

(54) **System for providing guaranteed wireless communication service to priority subscribers**

(30) Priority: 16.04.1999 US 293586
(71) Applicant: LUCENT TECHNOLOGIES INC., Murray Hill, New Jersey 07974-0636 (US)
(72) Inventor: Boland, Richard Robert, Lagrange, Illinois 60525 (US); McCormick, Mark Alan, Naperville, Illinois 60564 (US); Vanasek, Ronald Mark, Downers Grove, Illinois 60515 (US)
(74) Representative: Buckley, Christopher Simon Thirsk

(57) **Abstract**

The system for providing guaranteed wireless communication service to priority wireless communication subscribers provides the capability to restrict access to wireless communications services to a selected set of subscribers, such that their access to wireless communication services is not interruptible. This is accomplished by provisioning the cell sites of a wireless communications system into a plurality of service priority groupings, with wireless subscribers being assigned a one of the plurality of service priorities. The wireless service provider can manually activate the system to provide guaranteed wireless communication service for subscribers in a selected one or more of the service priorities in response to the occurrence of an emergency. Alternatively, the system can automatically engage in response to a traffic overload condition to ensure that emergency service personnel have immediate access to wireless communication services, regardless of the presence of an emergency situation that impacts the traffic load on the wireless communication system. The wireless subscribers who have been assigned a predetermined service priority are provided with access to reserved wireless communication capacity in the wireless communication system by either reserving a predetermined amount of wireless communication capacity for the use of the priority wireless subscribers or dynamically reserving wireless communication capacity by denying access to wireless communication subscribers when they attempt to initiate a wireless call connection in the impacted call coverage area.

## Description

### Field of the Invention

This invention relates to wireless communications systems and, in particular, to a system for providing priority subscribers, such as emergency service personnel, with guaranteed access to wireless communication services.

### Problem

It is a problem in the field of wireless communication systems to appropriately allocate cell site and network resources to serve the increasing demand for wireless communications services. This problem of allocation of resources is exacerbated in emergency situations, where a multitude of wireless communications subscribers all vie for limited available wireless resources. An example of this situation is in the instance on a natural disaster, such as a severe weather conditions, where the land lines are down or otherwise inaccessible or unavailable and the only communication service available to the subscriber is wireless communications. In this instance, wireless subscribers' service requests can cause a temporary overload in the wireless communication system. The emergency service personnel operational in the affected area have to compete for wireless communication service on an equal basis with the other wireless communication subscribers. The emergency service personnel can therefore be blocked from call origination within a cell or their existing wireless calls can be interrupted in a call handoff or as they traverse multiple cells. The interruption of an emergency call or the inability to place an emergency call is an unacceptable service condition, yet a reality in existing wireless communication systems. While the example of a natural disaster is mentioned, there are numerous other exceptional events that can cause the same effect on the wireless communication systems. Such events include but are not limited to: aircraft crashes, railroad accidents, acts of terrorism, public disturbances, and the like.

To a lesser degree, the same resource overload phenomena occurs in heavy traffic areas at certain times of day, such as in the vicinity of an airport at rush hour when a large number of flights are concurrently arriving and/or departing. Furthermore, the call origination by emergency service personnel is not the only critical service cases that are impacted by these conditions. The origination of a wireless call by a subscriber to an emergency service number represents another critical communication connection that is subject to the above-noted blocking. Thus, existing wireless communication systems treat vital communications with the same priority as non-essential wireless communications, since there is presently no capability in such systems to differentiate among wireless subscribers and/or call destinations.

### Solution

The above described problems are solved and a technical advance achieved in the field by the present system for providing guaranteed wireless communication service to priority wireless communication subscribers. This system provides the capability to restrict access to wireless communications services to a selected set of subscribers, such that their access to wireless communication services is not interruptible. This is accomplished by provisioning the cell sites of a wireless communications system into a plurality of service priority groupings, with wireless subscribers being assigned a one of the plurality of service priorities. The wireless service provider can then differentially provide wireless communication services to the wireless subscribers, based upon the service priority assigned to a particular subscriber.

The present system for providing guaranteed wireless communication service to priority wireless communication subscribers can remain in a standby or inactive state when there are ample wireless communication facilities to serve all of the subscribers extant in each cell of the wireless communications service area. However, the wireless service provider can manually activate the system to provide guaranteed wireless communication service for subscribers in a selected one or more of the service priorities in response to the occurrence of an emergency. Only those subscribers whose service priority has been authorized can therefore receive wireless communication services. Alternatively, the present system for providing guaranteed wireless communication service to priority wireless communication subscribers can automatically engage in response to a traffic overload condition to ensure that emergency service personnel have immediate access to wireless communication services, regardless of the presence of an emergency situation that impacts the traffic load on the wireless communication system. In either case, the wireless subscribers who have been assigned a predetermined service priority are provided with access to reserved wireless communication capacity in the wireless communication system to ensure their uninterrupted access to wireless communication services.

The extent of the operation of this system for providing guaranteed wireless communication service to priority wireless communication subscribers is controllable on a granularity selected by the wireless service provider, in that the system can be activated on a cell site basis, cell sector or cell face basis, such that the wireless communication service coverage area corresponds to the traffic impacted area. In addition, the operation of the present system for providing guaranteed wireless communication service to priority wireless communication subscribers is independent of the wireless communication technology used to provide wireless communication services and in fact can be provisioned to span multiple wireless communication technologies.

### Brief Description of the Drawing

Figure 1 is the block diagram of the architecture of the present system for providing guaranteed wireless communication service to priority wireless communication subscribers and one example of an existing commercial wireless communications system in which it is implemented;
Figure 2 illustrates in flow diagram form the operation of the present system for providing guaranteed wireless communication service to priority wireless communication subscribers; and
Figures 3 and 4 illustrate, respectively, a typical data structure used to define the plurality of service priorities and their assignment to wireless subscribers, and the optional wireless call capacity reserved for each service priority on a per cell, cell sector or cell face basis.

### Detailed Description

Cellular mobile telecommunication systems represent one example of wireless communications systems and function to provide the service of connecting mobile telecommunications customers, each having a mobile subscriber unit, to both land-based customers who are served by the common carrier public telephone network as well as other mobile telecommunications customers. In such a system, all incoming and outgoing calls are routed through the mobile switching center (MSC), which is connected to a plurality of base stations which communicate with mobile subscriber units located in the area covered by the base stations. The mobile subscriber units are served by the base stations, each of which is located in one cell of a larger service region. Each base station in the service region is connected by a group of communication links to the mobile switching center, with the communication link being either direct or indirect through a controller that may span a plurality of base stations. A communication link transports user data, which may be a digital representation of voice, between the base station and the mobile switching center. Each base station contains a group of radio transmitters and receivers, with each transmitter-receiver pair being connected to one communication link. Each transmitter-receiver pair operates on a pair of radio frequencies: one frequency to transmit radio signals to the mobile subscriber unit and the other frequency to receive radio signals from the mobile subscriber unit.

The operation of the present system for providing guaranteed wireless communication service to priority wireless communication subscribers is independent of the wireless communication technology used to provide wireless communication services and in fact can be provisioned to span multiple wireless communication technologies. The example used herein describes a CDMA wireless communication system and with CDMA systems, a plurality of transmitter-receiver pairs share a common frequency pair. This is made possible by the orthogonal coding that is inherent with CDMA. The first stage of a cellular communications connection is executed when a transmitter-receiver pair at the base station, operating on a predetermined pair of radio frequencies, is activated and a mobile subscriber unit is tuned to the same pair of radio frequencies. The second stage of the communication connection is executed at the mobile switching office during which the call path is extended to outgoing or incoming trunks to the common carrier public telephone network. At this point in time, the call is considered as being established. The mobile switching center contains a switching network to switch mobile customer's voice and/or data signals from the communication link to an incoming or outgoing trunk. The mobile communication system is controlled by a mobile telecommunication controller at or remotely connected to each base station associated with the mobile switching center. A plurality of data links connect the mobile telecommunication controller and the associated base station controllers. The mobile telecommunication controller operates under control of complex software and controls the switching network. The mobile telecommunication controller also controls the actions of the associated base station controllers by generating and interpreting the control messages that are exchanged with the associated base station controllers over the data links. The base station controllers at each base station, in response to control messages from the mobile telecommunication controller, control the assignment of transmitter-receiver pairs at the base station. The control processes at each base station also control the tuning of the mobile subscriber units to the selected radio frequency.

Each cell in the ground-based cellular mobile telecommunication network comprises a predetermined volume of space radially arranged around the base station transmitting antenna with the region of space roughly approximating a cylindrical volume having a limited height. Since all of the mobile subscriber units are installed in ground-based units (such as motor vehicles) in traditional cellular mobile telecommunication systems, the antenna radiation pattern of the base station is aligned to be proximate to the ground and the polarization of the signals produced by the base station antenna is vertical in nature. In order to prevent the radio signals in one base station from interfering with radio signals in an adjacent base station, the transmitter-receiver frequencies and/or orthogonal coding for adjacent base stations are selected to be different so that there is sufficient signal separation between adjacent transmitter frequencies and orthogonal coding to avoid overlapping transmissions among the adjacent base stations. When a ground-based mobile subscriber unit initiates a call connection, control signals from the local base station transmitter cause the frequency agile transceiver in the ground-based mobile subscriber unit to operate at the frequency of operation and orthogonal coding designated for that particular base station. As the ground-based mobile subscriber unit moves from one base station to another, the call connection is handed off to the successive base stations and the frequency agile transceiver in the ground-based mobile subscriber unit adjusts its frequency of operation and/or orthogonal coding of the transmitter located at the base station in which the ground-based mobile subscriber unit is presently operational. Furthermore, with CDMA, it is possible that a mobile subscriber unit may be simultaneously communicating with a plurality of base stations. Such a configuration is commonly called a soft handoff and is preferable to hand-offs in which a mobile subscriber unit is transferred from one base station to another. The latter type of handoff is commonly called a hard handoff. With a soft handoff, base stations are added or dropped from the plurality of base stations serving the mobile subscriber unit as the mobile subscriber unit traverses the serving area supported by the mobile switching center. However, all of the base stations in the plurality of base stations serving the mobile subscriber unit must communication with the given mobile subscriber unit on the same transmitter-receiver frequencies.

### Wireless Communications System Architecture

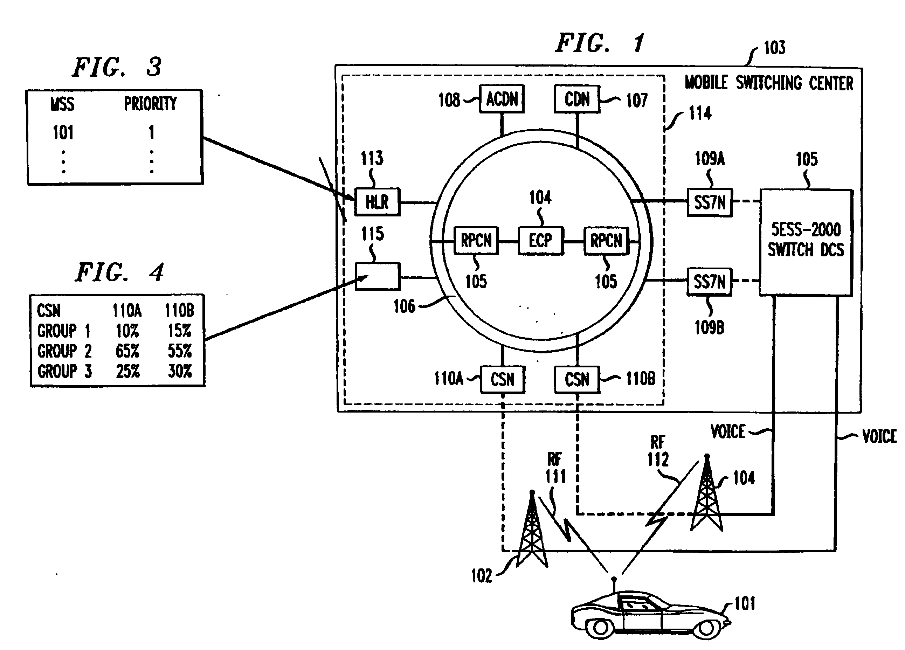

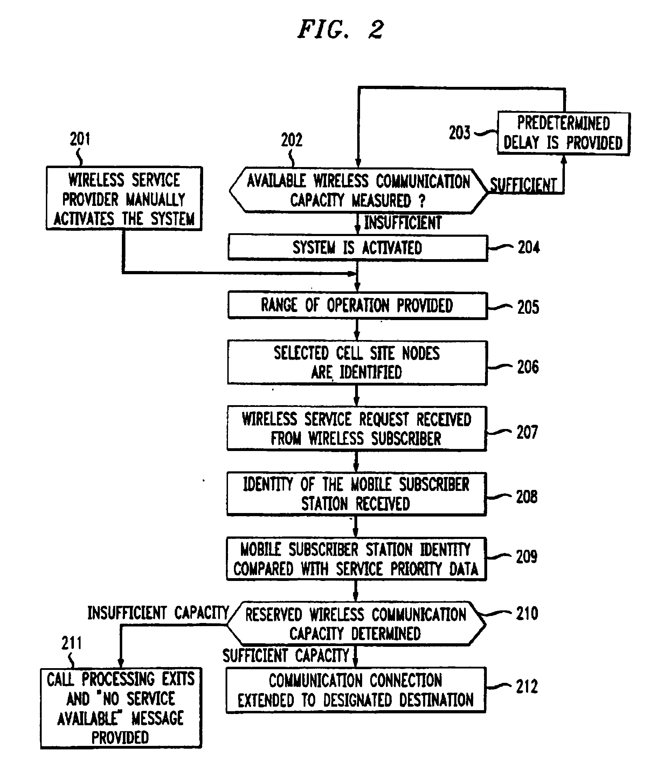

Figure 1 is the block diagram of the architecture of the present system for providing guaranteed wireless communication service to priority wireless communication subscribers 111 and one example of an existing commercial wireless communications system in which it is implemented, and Figure 2 illustrates in flow diagram form the operation of the present system for providing guaranteed wireless communication service to priority wireless communication subscribers. In the description of the disclosed invention, the major entities are the mobile subscriber station 101, base stations 102 and 104, and the mobile switching center 103. The mobile switching center 103 contains a mobile telecommunication controller 114 which includes an executive control processor (ECP) 104 connected to a ring peripheral controller node (RPCN) 105, both of which are linked to a ring structure 106. The ring structure 106 provides a transport means for communicating among the entities within the mobile switching center 103. Also contained within the mobile telecommunication controller 114 are call processing/database node (CDN) 107 and an administrative call processing node (ACDN) 108. A major function of these entitles is the execution of call processing associated with the mobile switching center 103. The 5ESS-2000 Switch DCS 105 provides the telephone connectivity between base stations 102 and 104. The 5ESS-2000 Switch DCS is connected to the IMS/CNI Ring 106 through SS7 nodes (SS7N) 109A, 109B. Base stations 102 and 104 are connected to the IMS/CNI Ring 106 through cell site nodes (CSN) 110A, 110B. The mobile switching center 103 has additional functionality such as billing, administration, and maintenance, requiring additional entities. However, the corresponding description of these entities are not essential to the embodiment of the disclosed invention. Base stations 102 and 104 communicate with mobile subscriber station 101 using RF channels 111 and 112, respectively. RF channels 111 and 112 convey both command messages as well as digital data, which may represent voice signals being articulated at the mobile subscriber station 101 and the far-end party. With a CDMA system, the mobile subscriber station communicates with at least one base station 102. In Figure 1, the mobile subscriber station 101 is simultaneously communicating with two base stations 102, 104, thus constituting a soft handoff. However, a soft handoff is not limited to a maximum of two base stations. Standard EIA/TIA IS-95-B supports a soft handoff with as many as six base stations. When in a soft handoff, the base stations serving a given call must act in concert so that commands issued over RF channels 111 and 112 are consistent with each other. In order to accomplish this consistency, one of the serving base stations may operate as the primary base station with respect to the other serving base stations. The base stations communicate with other base stations through the cell site nodes 110A, 110B. Of course, a mobile subscriber station 101 may communicate with only a single base station if determined as sufficient by the wireless communications system.

### Activation of the System far Providing Guaranteed Wireless Communication Service

The present system for providing guaranteed wireless communication service to priority wireless communication subscribers 111 provides the capability to restrict access to wireless communications services to a selected set of subscribers, such that their access to wireless communication services is not interruptible. This is accomplished by provisioning the cell site nodes 110A, 110B of a wireless communications system into a plurality of service priority groupings, with wireless subscribers being assigned a one of the plurality of service priorities, for example by the provision of service priority defining data in the Home Location Register 113 for the wireless subscribers. The wireless service provider can then differentially provide wireless communication services to the wireless subscribers, based upon the service priority assigned to a particular subscriber.

The system to provide guaranteed wireless communication service for subscribers 111 can either deny service to all wireless subscribers who are not members of the selected one or more of the service priorities, or can allocate the wireless communication capacity to the plurality of sets of service priorities on a predetermined threshold basis. Figures 3 and 4 illustrate, respectively, a typical data structure used to define the plurality of service priorities and their assignment to wireless subscribers, and the optional wireless call capacity reserved for each service priority on a per cell basis. For example X% of the wireless communication capacity can be reserved for use by the members of service priority group 1, while Y%of the wireless communication capacity can be reserved for use by the members of service priority group 2, and the like, which data is stored in memory 115. These defined percentages can vary from cell site node 110A to cell site node 110B. Therefore, the system to provide guaranteed wireless communication service for subscribers 111 always maintains a predetermined wireless communication capacity for emergency service personnel (as an example). Furthermore, in an emergency situation, the assigned percentages can be modified to thereby provide additional capacity for emergency service personnel, at the expense of diminishing the wireless communication capacity available to other wireless subscribers. The architecture and administration of the algorithm used to allocate wireless communication capacity is a matter of local needs and can be implemented in any number of ways. For the purpose of this description, the allocation of wireless communication capacity is assumed (for simplicity of description) to be manually activated and comprises fixed allocations between two service priority groups: emergency service personnel and other wireless subscribers. In addition, the extent of the operation of this system for providing guaranteed wireless communication service to priority wireless communication subscribers is controllable on a granularity selected by the wireless service provider, in that the system can be activated on a cell site basis, cell sector or cell face basis, such that the wireless communication service coverage area corresponds to the traffic impacted area. In the present example, a cell site basis as used to illustrate the concepts of the invention but this example is not intended to limit the applicability of this system to other wireless call coverage paradigms.

In operation, at step 201,the wireless service provider manually activates the system to provide guaranteed wireless communication service for subscribers 111 in a selected one or more of the service priorities in response to the occurrence of an emergency. This entails an employee of the wireless service provider, typically located at the mobile switching center 103, inputting control information via an administrative work station (not shown) to activate the system to provide guaranteed wireless communication service for subscribers 111. Alternatively, at steps 202-204 the present system for providing guaranteed wireless communication service to priority wireless communication subscribers 111 can automatically engage in response to a traffic overload condition to ensure that emergency service personnel have immediate access to wireless communication services, regardless of the presence of an emergency situation that impacts the traffic load on the wireless communication system. In this case, at step 202 the system to provide guaranteed wireless communication service for subscribers 111 measures the available wireless communication capacity in the wireless communication system and, if this capacity does not fall below a predetermined threshold, processing exits to step 203 where a predetermined delay is provided before the process reinitiates at step 202. If at step 202 this capacity does fall below the predetermined threshold, processing advances to step 204, where the system to provide guaranteed wireless communication service for subscribers 111 is activated. In either case, the wireless subscribers who have been assigned a predetermined service priority are provided with access to reserved wireless communication capacity in the wireless communication system to ensure their uninterrupted access to wireless communication services.

### Activated Range of Operation of the System

The system to provide guaranteed wireless communication service for subscribers 111 is activated to provide guaranteed wireless communication service in a manner that is commensurate with the locale(s) that require such service. Therefore, at step 205, the definition of the range of operation of the activated system to provide guaranteed wireless communication service for subscribers 111 is either input by the employee of the wireless service provider or automatically determined by the system to provide guaranteed wireless communication service for subscribers 111. The definition of the range of operation can be in geographic terms (such as county-wide), as provided to the wireless service provider by a responsible civil authority (such as a sherif's department), which geographic terms are translated to an associated set of cell site nodes 110A, 110B that provide wireless communications services in the corresponding geographic area. This translation can be a manual operation, but is preferably a preprogrammed translation that is contained within the system to provide guaranteed wireless communication service for subscribers 111 to thereby expedite the activation of this system and reduce the possibility of error in activation.

The processing of the operation of the activated system to provide guaranteed wireless communication service for subscribers 111 advances to step 206 where the selected cell site nodes 110A, 110B are identified in a database, or associated flag bits are set in call processing in the call processing/database node (CDN) 107 of the mobile switching center 103.

### Operation of the System for Providing Guaranteed Wireless Communication Service

The operation of the activated system to provide guaranteed wireless communication service for subscribers 111 is effected at step 207 in response to a wireless service request from a wireless subscriber, such as mobile subscriber station 101. In well known fashion, a wireless service request is initiated when a transmitter-receiver pair in a base station 102, operating on a predetermined pair of radio frequencies, is turned on and a mobile subscriber station 101, is tuned to the same pair of radio frequencies. When a ground-based mobile subscriber station 101 initiates a call connection, control signals from the local base station transmitter cause the frequency agile transponder in the ground-based mobile subscriber station 101 to operate at the frequency of operation and orthogonal coding designated for that particular base station 102. As the ground-based mobile subscriber station 101 moves from one base station 102 to another base station 104, the call connection is handed off to the successive base station 104 and the frequency agile transponder in the ground-based mobile subscriber station 101 adjusts its frequency of operation and orthogonal coding to correspond to the frequency of operation and orthogonal coding of the transmitter located in the base station 104 in which the ground-based mobile subscriber station 101 is presently operational.

### Base Stations and Control Channels

Mobile cellular telecommunication systems provide a plurality of concurrently active communications in the same service area, with the number of concurrently active communication connections exceeding the number of available radio channels. This is accomplished by reusing the channels via the provision of multiple base stations 102, 104 in the service area that is served by a single mobile switching center 103. The overall service area of a mobile switching center 103 is divided into a plurality of "cells", each of which includes a base station 102 and associated radio transmission tower. The radius of the cell is basically the distance from the base station tower to the furthest locus at which good reception between the mobile subscriber station 101 and the base station 102 can be effected. The entire service area of a mobile switching center 103 is therefore covered by a plurality of adjacent cells. There is an industry standard cell pattern in which sets of channels are reused. Within a particular cell, the surrounding cells are grouped in a circle around the first cell and the channels used in these surrounding cells differ from the channels used in the particular cell and from each of the other surrounding cells. Thus, the signals emanating from the radio transmission tower in the particular cell do not interfere with the signals emanating from the radio transmission towers located in each of the surrounding cells because they are at different frequencies and have different orthogonal coding. In addition, the next closest cell using the transmission frequency of the particular cell is far enough away from this cell that there is a significant disparity in signal power and therefore sufficient signal rejection at the receivers to ensure that there is no signal interference. The shape of the cell is determined by the surrounding terrain and is typically not circular, but skewed by irregularities in the terrain, the effect of buildings and vegetation and other signal attenuators present in the cell area. Thus, the cell pattern is simply conceptual in nature and does not reflect the actual physical extent on the various cells, since the implemented cells are not hexagonal in configuration and do not have precisely delimited boundary edges.

The control channels that are available in this system are used to setup the communication connections between the mobile subscriber stations 101 and the base station 102. When a call is initiated, the control channel is used to communicate between the mobile subscriber station 101 involved in the call and the local serving base station 102. The control messages locate and identify the mobile subscriber station 101, determine the dialed number, and identify an available voice/data communication channel consisting of a pair of radio frequencies and orthogonal coding which is selected by the base station 102 for the communication connection. The radio unit in the mobile subscriber station 101 retunes the transmitter-receiver equipment contained therein to use these designated radio frequencies and orthogonal coding. Once the communication connection is established, the control messages are typically transmitted to adjust transmitter power and/or to change the transmission channel when required to handoff this mobile subscriber station 101 to an adjacent cell, when the subscriber moves from the present cell to one of the adjoining cells. The transmitter power of the mobile subscriber station 101 is regulated since the magnitude of the signal received at the base station 102 is a function of the mobile subscriber station transmitter power and the distance from the base station 102. Therefore, by scaling the transmitter power to correspond to the distance from the base station 102, the received signal magnitude can be maintained within a predetermined range of values to ensure accurate signal reception without interfering with other transmissions in the cell.

In this system, the system to provide guaranteed wireless communication service for subscribers 111 receives the identity of the mobile subscriber station 101 from the base station 102 at sep 208 pursuant to the wireless service request process noted above. At step 209, the system to provide guaranteed wireless communication service for subscribers 111 compares the identity of the mobile subscriber station 101 with the service priority data stored in the Home Location Register 113 associated with this mobile subscriber station 101 to determine whether this mobile subscriber station 101 is entitled to wireless service. The comparison process can optionally determine at step 210 whether the wireless communication capacity reserved for use by the members of this service priority group can support a wireless communication connection for the mobile subscriber station 101. If these determinations indicate that the mobile subscriber station 101 should be denied service, call processing exits at step 211 where the mobile subscriber station 101 is provided with a brief "no service available" message and the radio channels are deallocated. If service can be provided to the mobile subscriber station 101, call processing advances to step 212 where the communication connection is extended from this transmitter-receiver pair of the base station 102 to another communications network, such as a common carrier public telephones network to complete the service request received from the mobile subscriber station 101. This second stage of the communication connection is set up in well known fashion in the mobile switching center 103, which is connected to the common carrier public telephone network by incoming and outgoing trunks. The mobile switching center 103 contains a switching network to switch mobile customer voice and/or data signals from the communication link to an incoming or outgoing trunk. The mobile telecommunication system is controlled by a mobile telecommunication controller 114 at the mobile switching center 103 and a base station controller (not shown) at or remotely connected to each base station 102, 104 associated with the mobile switching center 103. A plurality of data links connect the mobile telecommunication controller 114 and the associated base station controllers. The mobile telecommunication controller 114 operates under control of complex software and controls the switching network. The mobile telecommunication controller 114 also controls the actions of the associated base station controllers by generating and interpreting the control messages that are exchanged with the associated base station controllers over the data links. The base station controllers at each base station 102, 104, in response to control messages from the mobile telecommunication controller 114, control the transmitter-receiver pairs at the base station 102, 104. The control processes at each base station 102, 104 also control the tuning of the mobile subscriber stations 101 to the selected radio frequencies.

### Call Handoff

When a mobile subscriber station 101 approaches the boundary of a cell, the radio signal received at the base station 102 is at a minimum level. Since the mobile subscriber station 101 is at the boundary of two cells, the signal power from the transmitter located in the adjacent cell is equal to or greater than the original cell and a handoff procedure is initiated. First, the cell base station 102 may initiate a mobile subscriber station location process in the adjoining cells. Alternatively, the serving base station 102 may utilize measurements from the mobile subscriber station 101 by processing the received pilot strength measurement message. This first procedure is accomplished either by activation or continuous operation of a locating receiver in each of the adjoining cells which tunes to the radio frequency and channel on which the mobile subscriber station 101 is transmitting. The measured signal strength of this signal, as received at each of the adjoining cells, is compared and the strongest signal is indicative at that base station 104 which is to receive the handoff. If there is an available voice channel in that cell, the mobile subscriber station 101 is sent a message on the control channel to re-tune its transmitter to the identified available voice channel at the transmitter frequency and orthogonal coding of the selected cell. Simultaneously, the voice connection is switched at the base stations 102, 104 from one cell to the next via the Mobile Switching Center 103 to provide uninterrupted service. In this handoff process, the availability of wireless communication services is determined by the system to provide guaranteed wireless communication service for subscribers 111, using the above-defined service availability process of steps 208-212.

### Alternative Service Features

It is evident that there are numerous alternative embodiments of the present system for providing guaranteed wireless communication service to priority wireless communication subscribers that are possible. One such alternative entails a review of the destination defined in the mobile subscriber station call origination. Thus, calls initiated by a mobile subscriber station to an emergency service agency would be processed, by providing a dynamically assigned temporary service priority to the mobile subscriber station that initiates such a call so that contact with the emergency service agencies is not denied to the mobile subscriber stations.

### Summary

The system for providing guaranteed wireless communication service to priority wireless communication subscribers provides the capability to restrict access to wireless communications services to a selected set of subscribers, such that their access to wireless communication services is not interruptible. The wireless subscribers who have been assigned a predetermined service priority are provided with access to wireless communication capacity in the wireless communication system to ensure their uninterrupted access to wireless communication services. This access is ensured by either reserving a predetermined amount of wireless communication capacity for the use of the priority wireless subscribers or dynamically reserving wireless communication capacity by denying access to wireless communication subscribers when they attempt to initiate a wireless call connection in the impacted call coverage area.

## Claims

1. A system for providing guaranteed wireless communication service to predefined ones of wireless subscribers, comprising:
means for storing data indicative of a plurality of wireless subscriber service priorities and the identity of wireless subscribers who are assigned these service priorities; and
means for reserving wireless communication facilities for use by a set of wireless subscribers who have an assigned service priority at least as great as a predetermined threshold.

2. The system of claim 1 wherein said means for reserving comprises:
means for rejecting a call initiation request received from a wireless subscriber whose assigned service priority fails to be at least as great as said predetermined threshold.

3. The system of claim 2 wherein said means for reserving further comprises:
means for serving a call initiation request received from a wireless subscriber whose assigned service priority is at least as great as said predetermined threshold.

4. The system of claim 1 further comprising:
means for storing data indicative of wireless call capacity reserved for wireless subscribers in each of said plurality of wireless subscriber service priorities.

5. The system of claim 4 wherein said means for reserving comprises:
means for determining a service priority assigned to a wireless subscriber who generates a call initiation request;
means for determining availability of wireless call capacity reserved, as defined by data stored in said means for storing data indicative of wireless call capacity, for wireless subscribers assigned said service priority; and
means, responsive to a determined availability of said wireless call capacity reserved for wireless subscribers assigned said service priority, for serving said call initiation request received from said wireless subscriber.

6. The system of claim 4 wherein said means for reserving comprises:
means for determining a service priority assigned to a wireless subscriber who generates a call handoff request;
means for determining availability of wireless call capacity reserved, as defined by data stored in said means for storing data indicative of wireless call capacity, for wireless subscribers assigned said service priority; and
means, responsive to a determined availability of said wireless call capacity reserved for wireless subscribers assigned said service priority, for serving said call handoff request received from said wireless subscriber.

7. The system of claim 1 wherein said means for reserving comprises:
means for rejecting a call handoff request received from a wireless subscriber whose assigned service priority fails to be at least as great as said predetermined threshold.

8. The system of claim 7 wherein said means for reserving further comprises:
means for serving a call handoff request received from a wireless subscriber whose assigned service priority is at least as great as said predetermined threshold.

9. A method of providing guaranteed wireless communication service to predefined ones of wireless subscribers, comprising the steps of:
storing data in a memory that are indicative of a plurality of wireless subscriber service priorities and the identity of wireless subscribers who are assigned these service priorities; and
reserving wireless communication facilities for use by a set of wireless subscribers who have an assigned service priority at least as great as a predetermined threshold.

10. The method of claim 9 wherein said step of reserving comprises:
rejecting a call initiation request received from a wireless subscriber whose assigned service priority fails to be at least as great as said predetermined threshold.

11. The method of claim 10 wherein said step of reserving further comprises:
serving a call initiation request received from a wireless subscriber whose assigned service priority is at least as great as said predetermined threshold.

12. The method of claim 9 further comprising the step of:
storing data in a memory that is indicative of wireless call capacity reserved for wireless subscribers in each of said plurality of wireless subscriber service priorities.

13. The method of claim 12 wherein said step of reserving comprises:
determining a service priority assigned to a wireless subscriber who generates a call initiation request;
determining availability of wireless call capacity reserved, as defined by said data indicative of wireless call capacity stored in said memory, for wireless subscribers assigned said service priority; and
serving, in response to a determined availability of said wireless call capacity reserved for wireless subscribers assigned said service priority, said call initiation request received from said wireless subscriber.

14. The method of claim 12 wherein said step of reserving comprises:
determining a service priority assigned to a wireless subscriber who generates a call handoff request;
determining availability of wireless call capacity reserved, as defined by data stored in said means for storing data indicative of wireless call capacity, for wireless subscribers assigned said service priority; and
serving, in response to a determined availability of said wireless call capacity reserved for wireless subscribers assigned said service priority, said call handoff request received from said wireless subscriber.

15. The method of claim 9 wherein said step of reserving comprises:
rejecting a call handoff request received from a wireless subscriber whose assigned service priority fails to be at least as great as said predetermined threshold.

16. The method of claim 15 wherein said step of reserving further comprises:
serving a call handoff request received from a wireless subscriber whose assigned service priority is at least as great as said predetermined threshold.

17. A system, operational in a mobile switching center of a cellular communication system, for providing guaranteed cellular communication service to predefined ones of cellular subscribers, comprising:
memory means for storing data that is indicative of a plurality of cellular subscriber service priorities and the identity of cellular subscribers who are assigned these service priorities; and
mobile switching controller means for reserving cellular communication facilities for use exclusively by a set of cellular subscribers who have an assigned service priority at least as great as a predetermined threshold.

18. The system of claim 17 wherein said mobile switching controller means comprises:
means for rejecting a call initiation request received from a cellular subscriber whose assigned service priority fails to be at least as great as said predetermined threshold; and
means for serving a call initiation request received from a cellular subscriber whose assigned service priority is at least as great as said predetermined threshold.

19. The system of claim 17 further comprising:
memory means for storing data indicative of cellular call capacity reserved for cellular subscribers in each of said plurality of cellular subscriber service priorities.

20. The system of claim 19 wherein said mobile switching controller means comprises:
means for determining a service priority assigned to a cellular subscriber who generates a call initiation request;
means for determining availability of cellular call capacity reserved, as defined by data stored in said memory means indicative of cellular call capacity, for cellular subscribers assigned said service priority; and
means, responsive to a determined availability of said cellular call capacity reserved for cellular subscribers assigned said service priority, for serving said call initiation request received from said cellular subscriber.

21. The system of claim 19 wherein said mobile switching controller means comprises:
means for determining a service priority assigned to a cellular subscriber who generates a call handoff request;
means for determining availability of cellular call capacity reserved, as defined by data stored in said memory means indicative of cellular call capacity, for cellular subscribers assigned said service priority; and
means, responsive to a determined availability of said cellular call capacity reserved for cellular subscribers assigned said service priority, for serving said call handoff request received from said cellular subscriber.

22. The system of claim 17 wherein said mobile switching controller means comprises:
means for rejecting a call handoff request received from a cellular subscriber whose assigned service priority fails to be at least as great as said predetermined threshold; and
means for serving a call handoff request received from a cellular subscriber whose assigned service priority is at least as great as said predetermined threshold.
